# EUROPÄISCHE PATENTSCHRIFT

(11) **EP 0 876 972 B1**
(45) Veröffentlichungstag und Bekanntmachung des Hinweises auf die Patenterteilung: **06.05.2004**
(21) Anmeldenummer: 98890027.0
(22) Anmeldetag: 05.02.1998
(51) Int. Cl.: B65G 23/14, B65G 17/02

(54) **Förderanlage zum Transport von Gütern**
Conveyor device for products
Dispositif de transport pour produits

(30) Priorität: 08.04.1997 AT 59197
(43) Veröffentlichungstag der Anmeldung: 11.11.1998
(73) Patentinhaber: Innova Patent GmbH, 6960 Wolfurt (AT)
(72) Erfinder: Trieb, Herbert, 6922 Wolfurt (AT)
(74) Vertreter: Atzwanger, Richard, Dipl.-Ing. Patentanwalt

(56) Entgegenhaltungen:
- EP-A- 0 315 820
- EP-A- 0 745 545
- CH-A- 544 712
- GB-A- 1 195 985
- US-A- 3 785 296
- US-A- 4 378 875

## Beschreibung

Die gegenständliche Erfindung betrifft eine Förderanlage zum Transport von Gütern mittels eines in sich geschlossenen Förderbandes, welches mit quer zur Förderbewegung ausgerichteten Tragbalken ausgebildet ist und mit seitlich außerhalb des Förderbandes angeordneten, in sich geschlossenen Förderseilen, von welchen die durch die Förderung von Gütern bewirkten Belastungen aufgenommen werden, wobei die Tragbalken beiderseits des Förderbandes mittels zwei unter Wirkung einer Feder gegeneinander verschwenkbare Klemmbacken aufweisenden Klemmeinrichtungen an die Förderseile anklemmbar sind und wobei das Förderband und die Förderseile in den beiden Endstationen über Umlenktrommeln geführt sind.

Bekannte Förderanlagen bestehen aus einem in sich geschlossenen, an den beiden Enden über Umlenkwalzen geführten Förderband und aus unterhalb des oberen Trumes des Förderbandes angeordneten Tragwalzen, an welchen das Förderband zur Auflage kommt. Dabei muß das Förderband hinreichend zugfest ausgebildet sein, um einerseits die durch die Förderbewegung bedingten Zugkräfte und andererseits die durch das Gewicht des Fördergutes auf dieses ausgeübten Zugkräfte aufzunehmen. Die durch das Gewicht des Fördergutes verursachten Zugbelastungen des Förderbandes sind umso geringer, je geringer der Abstand der sich unterhalb des oberen Trumes des Förderbandes befindlichen Tragwalzen ist.
Da weiters bei bekannten derartigen Förderanlagen die Tragwalzen gegenüber dem Förderband nicht nur abrollen, sondern das Förderband über die Tragwalzen auch gleitet, wird eine hohe Zugbelastung des Förderbandes bedingt. Zudem wird hierdurch eine Abnützung des Förderbandes verursacht.

Bei bekannten derartigen Förderanlagen besteht somit das Erfordernis, entweder das Förderband mit einer sehr hohen Zugfestigkeit auszubilden, wobei sich die Tragwalzen in großem Abstand voneinander befinden können, wodurch über die gesamte Länge der Fördervorrichtung eine verringerte Anzahl von Förderwalzen vorgesehen werden kann, oder eine große Anzahl von Tragwalzen vorzusehen, welche in einem geringen Abstand voneinander vorgesehen sind, wobei zwar die durch das Gewicht des Fördergutes verursachten Zugebelastungen des Förderbandes verringert werden, wodurch dieses mit einer geringeren Zugfestigkeit ausgebildet werden kann, jedoch eine große Anzahl von Tragwalzen vorgesehen werden muß, wodurch der konstruktive Aufwand vergrößert wird.

Aus der EU 745 545 A1 ist eine Förderanlage bekannt, welche durch Tragseile gebildete Tragbahnen aufweist, längs welcher an den beiden Enden der Tragbalken gelagerte Rollen geführt sind. Diese bekannte Förderanlage ist jedoch insoferne nachteilig, als die Tragrollen bewegliche Teile darstellen, welche einer ständigen Kontrolle und Wartung bedürfen.

Aus der GB 1 195 985 A ist ein Förderband bekannt, welches mit quer zur Förderbewegung ausgerichteten Tragbalken ausgebildet ist. Diese Tragbalken sind mittels in Richtung der Tragbalken abragender Zapfen mit an beiden Seiten des Förderbandes angeordneten Ketten, welche als Trag- und Zugelemente dienen, gekuppelt. Förderketten sind jedoch deshalb nachteilig, da sie in ihrer Herstellung wesentlich teurer als Stahlseile sind und da sie bei vergleichbarer Zug- bzw. Tragleistung ein höheres Gewicht als Stahlseile aufweisen. Zudem sind sie deshalb wesentlich störungsanfälliger als Stahlseile, weil sie durch den Bruch eines einzigen Gliedes von einer Vielzahl von Gliedern insgesamt funktionsunfähig werden. Hinsichtlich der Bruchgefahr wird darauf verwiesen, daß bei Förderseilen durch eine magnettechnische Überwachung Beschädigungen so rechtzeitig feststellbar sind, daß Seilrisse mit Sicherheit vermieden werden können.

Die CH 544 712 A offenbart eine Förderanlage mit über Rollen geführten Förderseilen, mit welchen das Förderband gekuppelt ist. Dabei wird die Kupplung dadurch bewirkt, daß das Förderband mit Nuten ausgebildet ist, in welche die Förderseile eindringen und in diesen durch Formschluß gehalten sind. Diese bekannte Förderanlage ist jedoch deshalb nachteilig, da aufgrund von Zugbelastungen des Förderbandes und der Förderseile die erforderliche Kupplung zwischen dem Förderband und den Förderseilen nicht gewährleistet ist, wodurch gleichfalls Funktionsstörungen verursacht werden können.

Aus der EP-A-0 315 820 ist weiters eine Anlage bekannt, bei welcher Zugelemente, wie Zugseile oder Zugketten, vorgesehen sind, an welche mittels Federklemmen Mitnehmerwagen für das Förderband anklemmbar sind. Diese Anlage weist jedoch deshalb eine sehr aufwendige Konstruktion auf, da neben Zugelementen, welche in den Endstationen über Umlenktrommeln geführt sind und an welche das Förderband mittels Federklemmen angeklemmt ist, auch Führungselemente, wie Schienen, vorgesehen sein müssen, längs welcher die mit Laufrollen ausgebildeten Mitnehmerwagen verfahren werden, wobei weiters die Laufrollen der Mitnehmerwagen einer ständigen Wartung und Kontrolle bedürfen.

Der gegenständlichen Erfindung liegt demnach die Aufgabe zugrunde, eine Förderanlage gemäß der eingangs genannten Art zu schaffen, bei welcher die dem bekannten Stand der Technik anhaftenden Nachteile vermieden werden. Dies wird erfindungsgemäß dadurch erzielt, daß sich die beiden Klemmeinrichtungen jeweils in Fortsetzung der Tragbalken seitlich außerhalb der beiden Förderseile befinden.
Bei einer derartigen Förderanlage ist demnach das Förderband an die Förderseile anklemmbar, jedoch sind keine Laufrollen vorgesehen, mittels welcher das Förderband längs Tragseilen verfahrbar ist.

Vorzugsweise ist jeweils eine der Klemmbacken am Tragbalken starr befestigt und ist die andere Klemmbacke mittels der Klemmeinrichtung gegenüber der am Tragbalken starr befestigten Klemmbacke verschiebbar. Weiters sind vorzugsweise die Umlenktrommeln mit einem in axialer Richtung mittleren Bereich, an welchen das Förderband zum Anliegen kommt, und mit zwei seitlich angeordneten Seilrillen, in welchen die Förderseile geführt sind, ausgebildet.

Nach weiteren bevorzugten Merkmalen ist das Förderband an der Unterseite der Tragbalken befestigt, wodurch es durch die Tragbalken in einzelne Bereiche unterteilt ist. Dabei ist vorzugsweise das Förderband als Wellkantenförderband ausgebildet, wobei die Bodenfläche des oberen Trumes an den Unterseiten der Tragbalken befestigt ist und wobei weiters die Enden der zwischen den Tragbalken befindlichen Abschnitte der Wellkanten an den Seitenflächen der Tragbalken befestigt sind. Die Höhe der Tragbalken kann angenähert gleich der Höhe der Wellkanten sein.

Der Gegenstand der Erfindung ist nachstehend anhand eines in der Zeichnung dargestellten Ausführungsbeispieles näher erläutert. Es zeigen:
- Fig. 1: eine erfindungsgemäße Förderanlage, in Ansicht in Richtung der Förderbewegung,
- Fig. 2: die Förderanlage gemäß Fig. 1, in Seitenansicht,
- die Fig. 2a und 2b: Details A und B dieser Förderanlage, in gegenüber Fig. 2 vergrößertem Maßstab,
- Fig. 3: einen Abschnitt der Förderanlage gemäß Fig. 1, in Seitenansicht und in gegenüber Fig. 1 vergrößertem Maßstab,
- Fig. 3a: den in Fig. 3 dargestellten Abschnitt der Förderanlage, in Draufsicht,
- Fig. 4: diese Förderanlage, im Schnitt nach der Linie IV-IV der Fig. 3 in gegenüber Fig. 3 vergrößertem Maßstab,
- Fig. 5: ein Detail der Fig. 4, im Schnitt und in gegenüber Fig. 4 vergrößertem Maßstab,
- Fig. 6: eine Umlenkstation dieser Förderanlage, in Seitenansicht, und
- Fig. 7: eine Umlenkstation dieser Förderanlage, in Draufsicht und in gegenüber Fig. 6 vergrößertem Maßstab.

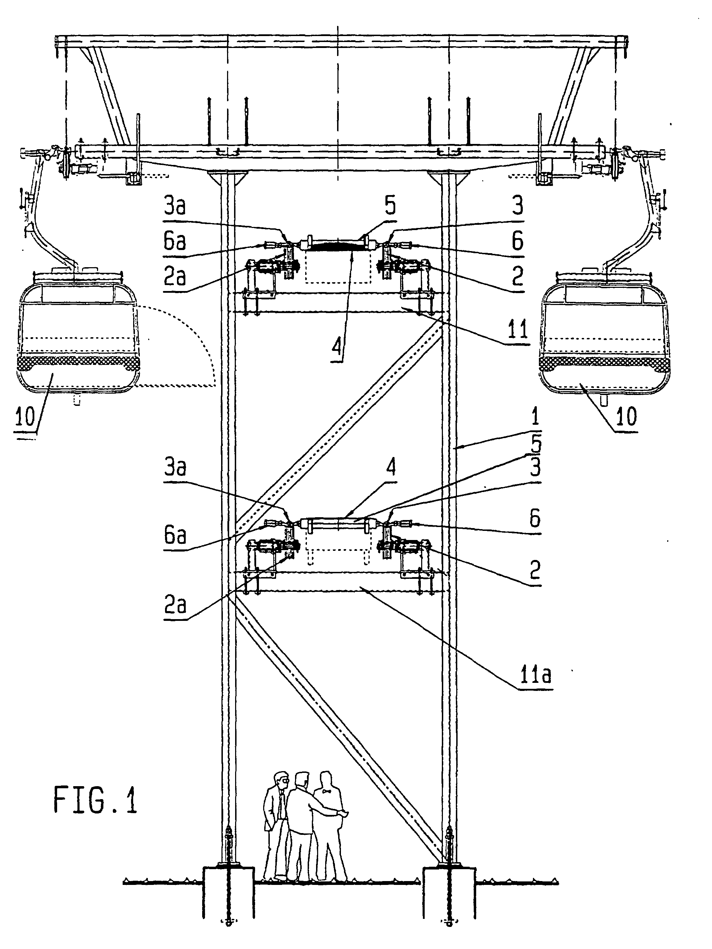

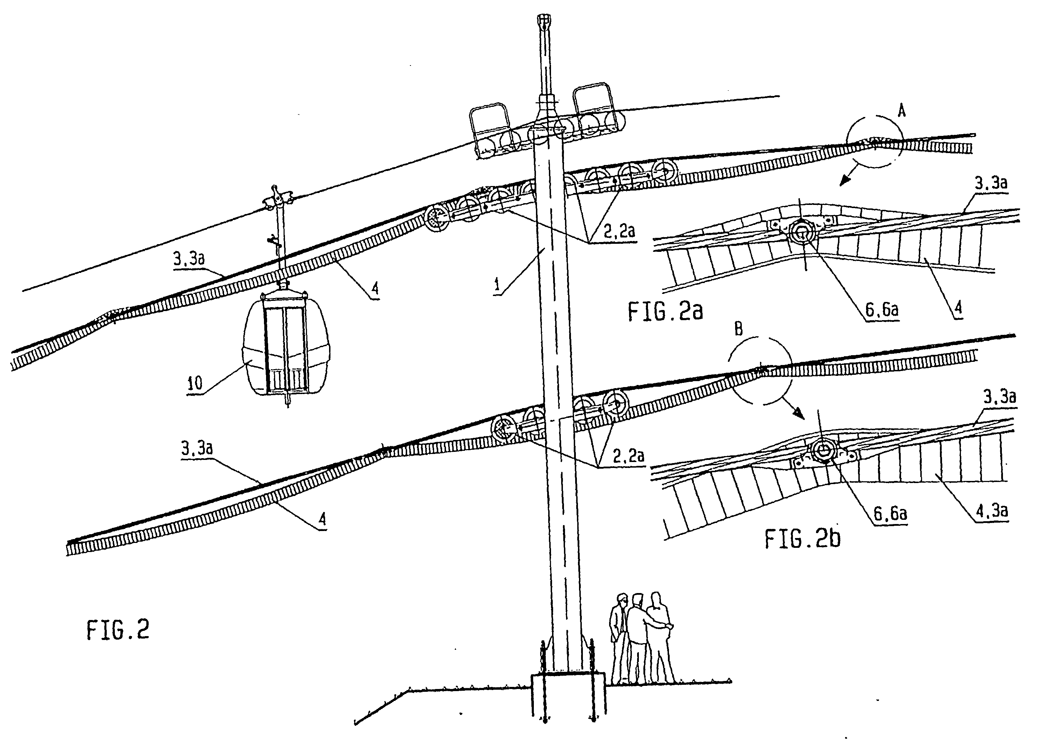

In den Fig. 1 und 2 ist eine Stütze 1 für eine herkömmliche Seilbahnanlage zum Transport von Personen dargestellt. Auf dieser Stütze 1 sind Rollen gelagert, in welchen ein Trag- und Förderseil für Sessel 10 geführt ist. Da diese Seilbahnanlage nicht Gegenstand der vorliegenden Erfindung ist, ist sie nicht weiter erläutert.

Innerhalb der Stütze 1 ist eine Förderanlage zum Transport von Gütern angeordnet. Hierfür ist die Stütze 1 mit zwei übereinander befindlichen Querbalken 11 und 11a ausgebildet, an welchen Rollen 2 und 2a gelagert sind. Diese Förderanlage besteht weiters aus zwei parallel angeordneten und in sich geschlossenen Förderseilen 3 und 3a, welche auf den Rollen 2 und 2a geführt sind und welche in den Endstationen der Förderanlage um Umlenktrommeln geführt sind. Weiters enthält die Förderanlage ein in sich geschlossenes Förderband 4, welches an den Unterseiten von quer zur Bewegungsrichtung des Förderbandes 4 ausgerichteten Tragbalken 5 befestigt ist, An den seitlichen Enden der Tragbalken 5 sind Klemmeinrichtungen 6 und 6a angeordnet, mittels welcher die Tragbalken 5 an die Förderseile 3 und 3a angeklemmt sind.

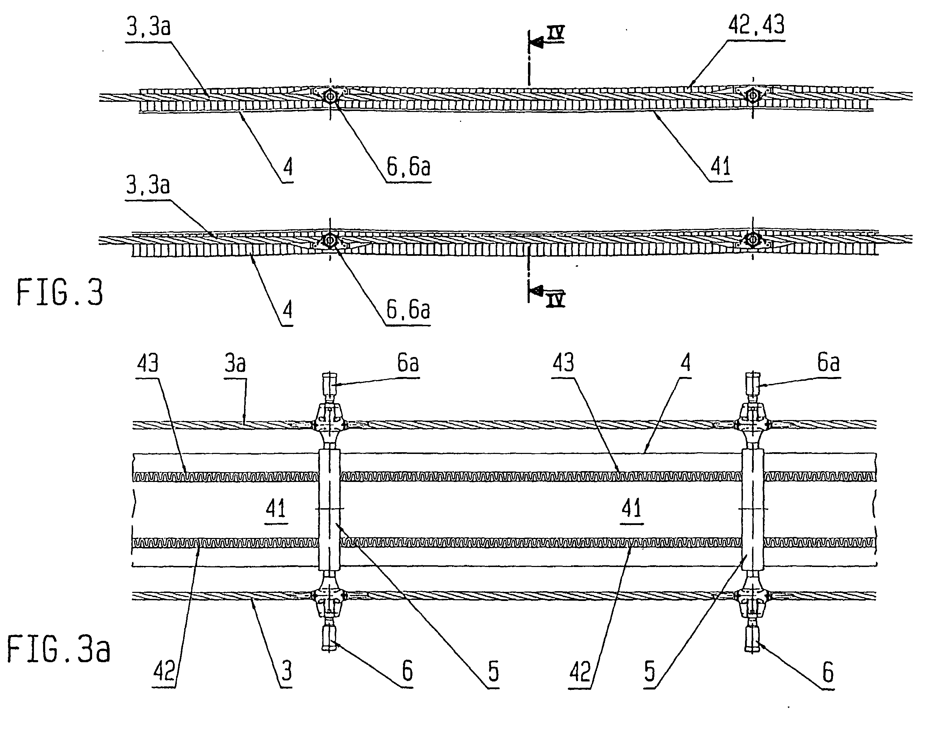

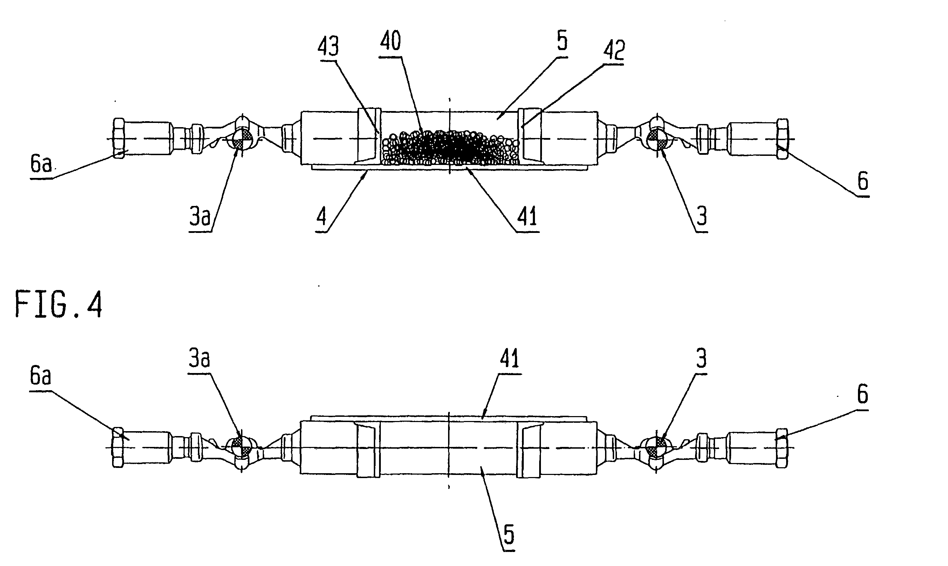

Wie dies insbesondere aus den Fig. 3 und Fig. 3a ersichtlich ist, ist das Förderband 4 als Wellkantenförderband ausgebildet, welches eine Bodenwand 41 aufweist, welche an den Unterseiten der Tragbalken 5 befestigt ist und von welcher nach oben zwei Seitenwände 42 und 43 abragen, welche gewellt ausgebildet sind. Dabei sind die Enden der jeweils zwischen den Tragbalken 5 befindlichen Abschnitte der Seitenwände 42 und 43 an den Seitenwänden der Tragbalken 5 befestigt. Hierdurch werden vom jeweils oberen Trum des Förderbandes 4 durch die Bodenwand 41, die Seitenwände 42 und 43 und zwei aufeinanderfolgende Tragbalken 5 Bereiche gebildet, in welchen Materialien, z.B. Schüttgüter 40, transportiert werden können. Es wird diesbezüglich auf die Fig. 4 verwiesen.

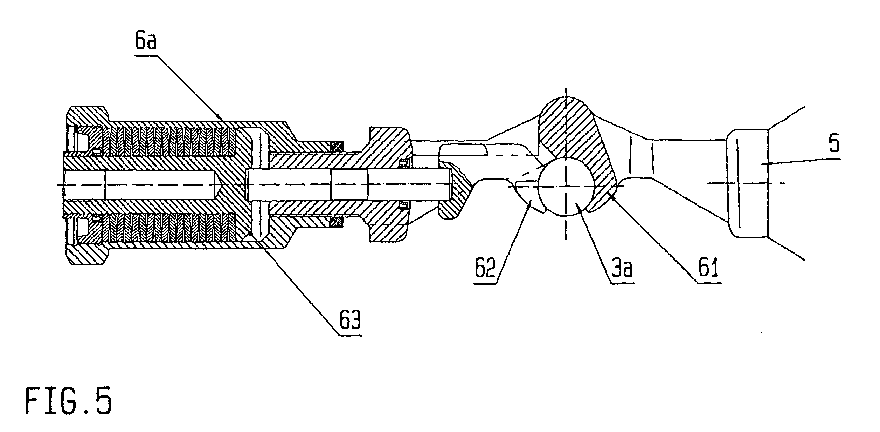

Wie dies insbesondere aus den Fig. 4 und 4a ersichtlich ist, sind an den freien Enden der Tragbalken 5 Klemmeinrichtungen 6 und 6a angeordnet, mittels welcher die Tragbalken 5 an die beiden seitlich außerhalb der Tragbalken 5 befindlichen Förderseile 3 und 3a angeklemmt sind.
Wie dies aus Fig. 5 ersichtlich ist, sind die Klemmeinrichtungen 6, 6a durch aus der Seilbahntechnik bekannte Klemmen gebildet, bei welchen eine erste Klemmbacke 61 vorgesehen ist, welche am Tragbalken 5 starr befestigt ist und welche an das Förderseil 3a zum Anliegen kommt, wogegen eine zweite Klemmbacke 62 gegenüber der ersten Klemmbacke 61 mittels einer Spanneinrichtung 63, welche Tellerfedern enthält, verschiebbar ist, wodurch sie an das Förderseil 3a federnd zum Anliegen kommt.

Eine derartige Befestigung des Förderbandes 4 ist deshalb erforderlich, da sich der Querschnitt der Förderseile 3 und 3a während des Betriebes der Förderanlage verändern kann, weswegen für eine sichere Befestigung des Förderbandes 4 an den Förderseilen 3 und 3a eine federnde Anpressung der Klemmbacken 61 und 62 an die Förderseile 3 und 3a erforderlich ist.

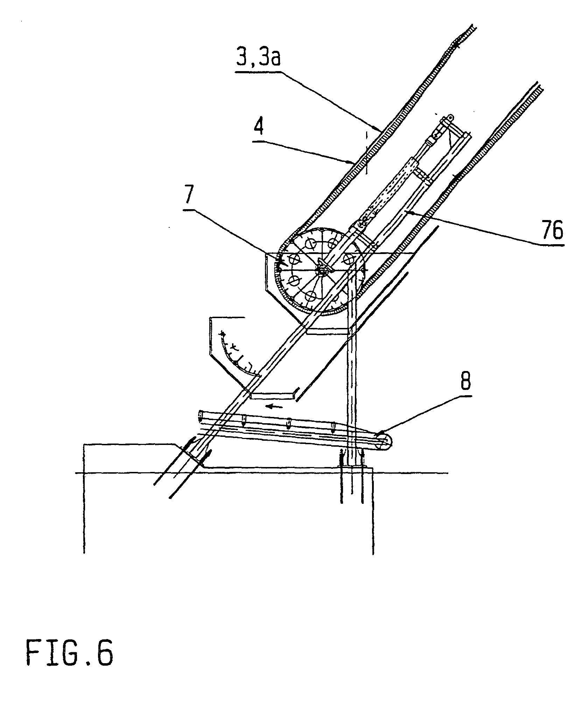

Wie dies aus Fig. 6 ersichtlich ist, sind an den Enden der Förderanlage Umlenktrommeln 7 vorgesehen, um welche die Förderseile 3 und 3a und das Förderband 4 herumgeführt sind. Dabei ist jede Umlenktrommel 7 mit einer Spanneinrichtung 76 ausgebildet. Dem jeweiligen Ende des Förderbandes 4 ist eine weitere Fördereinrichtung 8 zugeordnet, an welche das geförderte Gut abgegeben wird und von welcher es weiter transportiert wird.

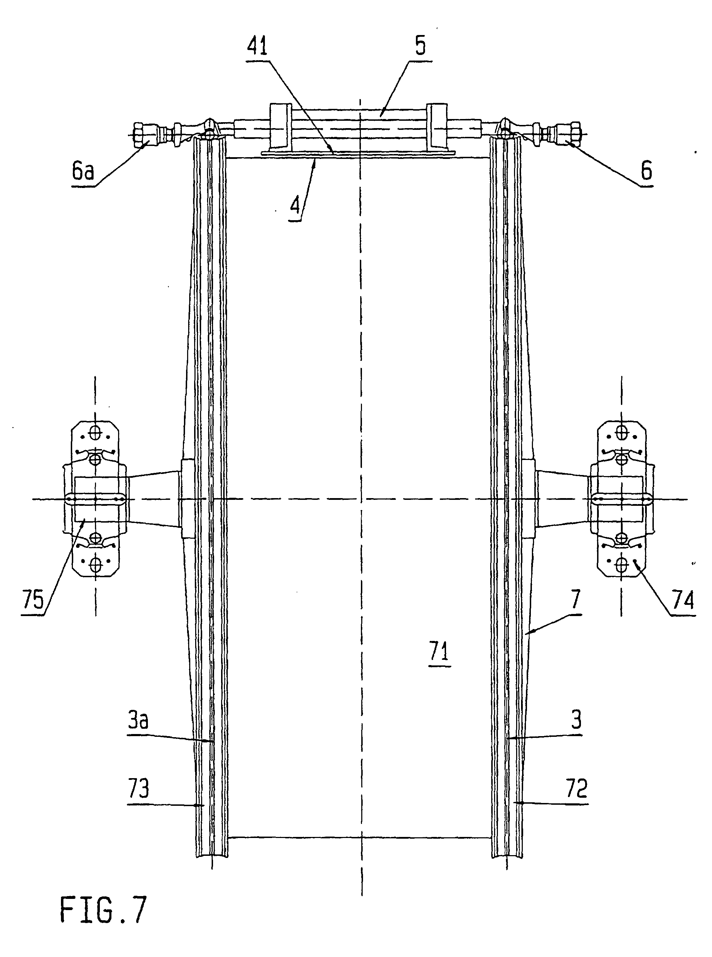

Wie dies weiters aus Fig. 7 ersichtlich ist, weist die Umlenktrommel 7 einen mittleren Bereich 71 auf, an welchem das Förderband 4 geführt ist, und ist sie außerhalb dieses mittleren Bereiches 71 mit zwei Seilrillen 72 und 73 ausgebildet, in welchen die Förderseile 3 und 3a geführt sind. Die Umlenktrommel 7 ist in Lagerböcken 74 und 75 verdrehbar gelagert.

## Patentansprüche

1. Förderanlage zum Transport von Gütern (40) mittels eines in sich geschlossenen Förderbandes (4), welches mit quer zur Förderbewegung ausgerichteten Tragbalken (5) ausgebildet ist und mit seitlich außerhalb des Förderbandes (4) angeordneten, in sich geschlossenen Förderseilen (3, 3a), von welchen die durch die Förderung von Gütern (40) bewirkten Belastungen aufgenommen werden, wobei die Tragbalken (5) beiderseits des Förderbandes (4) mittels zwei unter Wirkung einer Feder gegeneinander verschwenkbare Klemmbacken (61, 62) aufweisenden Klemmeinrichtungen (6) an die Förderseile (3, 3a) anklemmbar sind und wobei das Förderband (4) und die Förderseile (3, 3a) in den beiden Endstationen über Umlenktrommeln (7) geführt sind, **dadurch gekennzeichnet, daß** sich die beiden Klemmeinrichtungen (6, 6a) jeweils in Fortsetzung der Tragbalken (5) seitlich außerhalb der beiden Förderseile (3, 3a) befinden.

2. Förderanlage nach Patentanspruch 2, **dadurch gekennzeichnet, daß** jeweils eine der Klemmbacken (61) am Tragbalken (5) starr befestigt ist und die andere Klemmbacke (62) mittels der Klemmeinrichtung (63) gegenüber der am Tragbalken (6) starr befestigten Klemmbacke (61) verschiebbar ist.

3. Förderanlage nach einem der Patentansprüche 1 und 2, **dadurch gekennzeichnet, daß** die Umlenktrommeln (7) mit einem in axialer Richtung mittleren Bereich (71), an welchen das Förderband (4) zum Anliegen kommt, und mit zwei seitlich angeordneten Seilrillen (72, 73), in welchen die Förderseile (3, 3a) geführt sind, ausgebildet ist.

4. Förderanlage nach einem der Patentansprüche 1 bis 3, **dadurch gekennzeichnet, daß** das Förderband (4) an der Unterseite der Tragbalken (5) befestigt ist, wodurch es durch die Tragbalken (5) in einzelne Bereiche unterteilt ist.

5. Förderanlage nach einem der Patentansprüche 1 bis 4, **dadurch gekennzeichnet, daß** das Förderband (4) als Wellkantenförderband ausgebildet ist, wobei die Bodenfläche (41) des oberen Trumes an den Unterseiten der Tragbalken (5) befestigt ist und wobei weiters die Enden der zwischen den Tragbalken (5) befindlichen Abschnitte der Wellkanten (42, 43) an den Seitenflächen der Tragbalken (5) befestigt sind.

6. Förderanlage nach Patentanspruch 5, **dadurch gekennzeichnet, daß** die Höhe der Tragbalken (5) angenähert gleich der Höhe der Wellkanten (42, 43) ist.

## Claims

1. A conveying installation for conveying goods (40) by means of an endless conveyor belt (4), which is provided with supporting beams (5) oriented transversely relative to the conveying movement and with endless hauling cables (3, 3a) arranged laterally to the outside of the conveyor belt (4), by which hauling cables (3, 3a) the loads produced by the conveyance of goods (40) are absorbed, the supporting beams (5) being capable of being clamped to the hauling cables (3, 3a) on each side of the conveyor belt (4) by means of two clamping devices (6) comprising clamping jaws (61, 62) swivellable towards one another under the action of a spring and the conveyor belt (4) and the hauling cables (3, 3a) being guided over return drums (7) in the two end stations, **characterised in that** the two clamping devices (6, 6a) are each located as extensions of the supporting beams (5) laterally to the outside of the two hauling cables (3, 3a).

2. A conveying installation according to claim 2, **characterised in that** in each case one of the clamping jaws (61) is attached rigidly to the supporting beam (5) and the other clamping jaw (62) may be displaced by means of the clamping device (63) relative to the clamping jaw (61) attached rigidly to the supporting beam (5).

3. A conveying installation according to one of claims 1 and 2, **characterised in that** the return drums (7) are provided with an axially central zone (71), against which the conveyor belt (4) comes to rest, and with two laterally arranged cable grooves (72, 73), in which the hauling cables (3, 3a) are guided.

4. A conveying installation according to one of claims 1 to 3, **characterised in that** the conveyor belt (4) is attached to the underside of the supporting beams (5), whereby it is divided by the supporting beams (5) into individual zones.

5. A conveying installation according to one of claims 1 to 4, **characterised in that** the conveyor belt (4) takes the form of a corrugated sidewall conveyor belt, wherein the base surface (41) of the top run is attached to the undersides of the supporting beams (5) and wherein, in addition, the ends of the portions of the corrugated sidewalls (42, 43) located between the supporting beams (5) are attached to the side faces of the supporting beams (5).

6. A conveying installation according to claim 5, **characterised in that** the height of the supporting beams (5) is approximately equal to the height of the corrugated sidewalls (42, 43).

## Revendications

1. Convoyeur pour le transport de produits (40) à l'aide d'une bande transporteuse sans fin (4) qui est pourvue de poutres (5) transversales par rapport au sens de transport et de câbles tracteurs sans fin (3, 3a) qui sont disposés sur les côtés, en dehors de la bande transporteuse (4), et qui reçoivent les contraintes provoquées par le transport des produits (40), les poutres (5) étant aptes à être serrées sur les câbles (3, 3a), des deux côtés de la bande transporteuse (4), grâce à deux dispositifs de serrage (6) comportant des mâchoires de serrage (61, 62) aptes à pivoter l'une par rapport à l'autre sous l'action d'un ressort, et la bande transporteuse (4) et les câbles (3, 3a) étant guidés sur des tambours de renvoi (7) dans les deux stations d'extrémité,
**caractérisé en ce que** les deux dispositifs de serrage (6, 6a) se trouvent dans le prolongement des poutres (5), sur les côtés, en dehors des deux câbles respectifs (3, 3a).

2. Convoyeur selon la revendication 2, **caractérisé en ce que** l'une des mâchoires de serrage (61) est fixée rigidement à la poutre (5) tandis que l'autre mâchoire de serrage (62) est mobile, grâce au dispositif de serrage (63), par rapport à la mâchoire (61) fixée rigidement à la poutre (5).

3. Convoyeur selon la revendication 1 ou 2, **caractérisé en ce que** les tambours de renvoi (7) sont pourvus d'une zone (71) centrale, dans le sens axial, contre laquelle la bande transporteuse (4) vient s'appliquer, et de deux rainures (72, 73) disposées sur les côtés, dans lesquelles les câbles tracteurs (3, 3a) sont guidés.

4. Convoyeur selon l'une des revendications 1 à 3, **caractérisé en ce que** la bande transporteuse (4) est fixée au côté inférieur des poutres (5), et est ainsi divisée par les poutres (5) en zones individuelles.

5. Convoyeur selon l'une des revendications 1 à 4, **caractérisé en ce que** la bande transporteuse (4) est conçue comme une bande transporteuse à bords ondulés, la surface inférieure (41) du brin supérieur étant fixée aux côtés inférieurs des poutres (5) et les extrémités des sections des bords ondulés (42, 43) situées entre les poutres (5) étant par ailleurs fixées aux surfaces latérales des poutres (5).

6. Convoyeur selon la revendication 5, **caractérisé en ce que** la hauteur des poutres (5) est approximativement égale à la hauteur des bords ondulés (42, 43).
